# EUROPEAN PATENT APPLICATION

(11) **EP 0 952 202 A1**
(43) Date of publication of application: **27.10.1999**
(21) Application number: 98303161.8
(22) Date of filing: 23.04.1998
(51) Int. Cl.: C10G 11/18, B01J 8/00

(54) **Fluid catalytic cracking reactor system**

(71) Applicant: SHELL INTERNATIONALE RESEARCH MAATSCHAPPIJ B.V., 2596 HR Den Haag (NL)
(72) Inventor: Disselhorst, Johannes Hermanus Maria, 1031 CM Amsterdam (NL); Dries, Hubertus Wilhelmus Albertus, 1031 CM Amsterdam (NL)

(57) **Abstract**

A fluid catalytic cracking reactor system (1) comprising a reactor vessel (2) provided at its lower end with a stripping zone (3), a reactor riser (5) of which the downstream end part (6) is located in the reactor vessel (2) above the stripping zone (3), a flow-reversal element (10) arranged at the upper end (7) of the reactor riser (5) provided with outlet openings (12, 12'), open-ended downwardly directed reaction conduits (15, 15') having upstream ends (16, 16') which are in fluid communication with the outlet openings (12, 12') and downstream ends (20, 20') opening above the stripping zone (3), open-ended shrouds (25, 25') of which the upper parts (26, 26') are arranged around the reaction conduits (15, 15') and of which the lower parts extend into the stripping zone (3), and particle separators (30, 30') of which the inlets (31, 31') are in fluid communication with openings (33, 33') in the walls of the shrouds (25, 25').

## Description

The present invention relates to a fluid catalytic cracking reactor system comprising a reactor vessel provided at its lower end with a stripping zone and a reactor riser of which the downstream end is located in the reactor vessel above the stripping zone.

Such a fluid catalytic cracking reactor system is disclosed in USA patent specification No. 4 043 899.

In the reactor system described in this publication, the reactor riser is a vertical tube extending into the reactor vessel. The upper end of the downstream end of the reactor riser is closed, and there is provided an opening in the wall of the reactor riser near the top which is connected by means of a conduit to the inlet of a cyclone separator provided with an outlet for gas and a dipleg which extends to the stripping zone.

During normal operation, a mixture of gaseous hydrocarbons and dispersed catalyst particles is passed at elevated temperatures upwards through the reactor riser. In the reactor riser the cracking reaction takes place. The reactor effluent is removed from the upper end of the reactor riser and passed to the cyclone separator. In the cyclone separator the reactor effluent is separated into a catalyst rich underflow and a catalyst-depleted gaseous overhead stream containing the reaction products which is removed through the gas outlet. The separated catalyst particles are passed downwards through the dipleg to the stripping zone which contains a bed of catalyst particles fluidized by the action of stripping steam. To maintain the catalyst inventory in the stripping zone at a substantial constant level, stripped catalyst is removed from the stripping zone through a catalyst outlet, and from there the catalyst is passed to a regenerator.

In this reactor system, catalyst and gaseous hydrocarbons are only in contact with each other in the reactor riser where cracking takes place, and on leaving the reactor riser the hydrocarbons are separated from the catalyst.

There are several indications that the overall performance of such a cracking reactor can be improved. It was found that a prolonged contact between catalyst and the gaseous hydrocarbons could improve the yield. Because the length of the reactor riser is limited, alternatives in the form of secondary cracking outside the reactor riser had been considered.

An example of such secondary cracking is disclosed in USA patent specification No. 5 449 497. This publication discloses a fluid catalytic cracking reactor system comprising a reactor vessel provided at its lower end with a stripping zone and a reactor riser of which the downstream end is located in the reactor vessel above the stripping zone, wherein the reactor riser is open at the top of the downstream end. A collector is arranged around the downstream end of the reactor riser, which collector has an annular inlet in fluid communication with the interior of the reactor vessel and an outlet which is in fluid communication with the inlet of a cyclone separator.

During normal operation the reactor effluent exiting the open top of the reactor riser flows along a curved path within the interior of the reactor vessel towards the annular inlet of the collector. From the collector it flows to the cyclone separator where catalyst particles are separated from the reactor effluent. Secondary cracking takes place when the reactor effluent flows along the curved path from the outlet of the reactor riser to the annular inlet of the collector.

This secondary cracking is sometimes referred to as post-riser cracking, because it takes place after the primary cracking in the reactor riser.

In the known reactor system, the secondary cracking takes place in a dilute phase. In the dilute phase there are large differences between the residence times of catalyst and the residence times of gaseous hydrocarbons. Consequently under-cracking as well as over-cracking will occur.

It is an object of the present invention to provide a fluid catalytic cracking reactor system which allows secondary cracking in a more controlled way.

To this end the fluid catalytic cracking reactor system according to the present invention comprises a reactor vessel provided at its lower end with a stripping zone, a reactor riser of which the downstream end part is located in the reactor vessel above the stripping zone, a flow-reversal element arranged at the upper end of the reactor riser provided with an outlet opening, an open-ended downwardly directed reaction conduit having an upstream end which is in fluid communication with the outlet opening and a downstream end opening above the stripping zone, an open-ended shroud of which the upper part is arranged around the reaction conduit and of which the lower part extends into the stripping zone, and a particle separator of which the inlet is in fluid communication with an opening in the wall of the shroud.

Reference is made to USA patent specification No. 4 385 985. This publication discloses a fluid catalytic cracking reactor system comprising a downflow reactor conduit, having at its upper end an inlet for hydrocarbon feed, a catalyst transfer conduit debouching into the upper end of the downflow reactor conduit, a particle separator of which the inlet is in fluid communication with the lower end of the downflow reactor conduit having outlets for particles and for products, and a stripping zone into which the outlet for particles of the particle separator debouches.

This publication is not relevant to the present invention because it does not relate to two-stage cracking, moreover it does not disclose that there is a shroud provided around the downflow reactor conduit. In the system of the present invention, the annular space between the inner wall of the shroud and the outer wall of the downflow reactor conduit is a passage for gaseous reaction products, and in this way the shroud assists in a primary separation of catalyst particles from the reactor effluent.

The invention will now be described by way of example in more detail with reference to the accompanying drawings, wherein
Figure 1 shows schematically a vertical section of the upper part of a reactor vessel of a fluid catalytic cracking system according to the present invention
Figure 2 shows schematically an alternative to the fluid catalytic cracking system as shown in Figure 1.

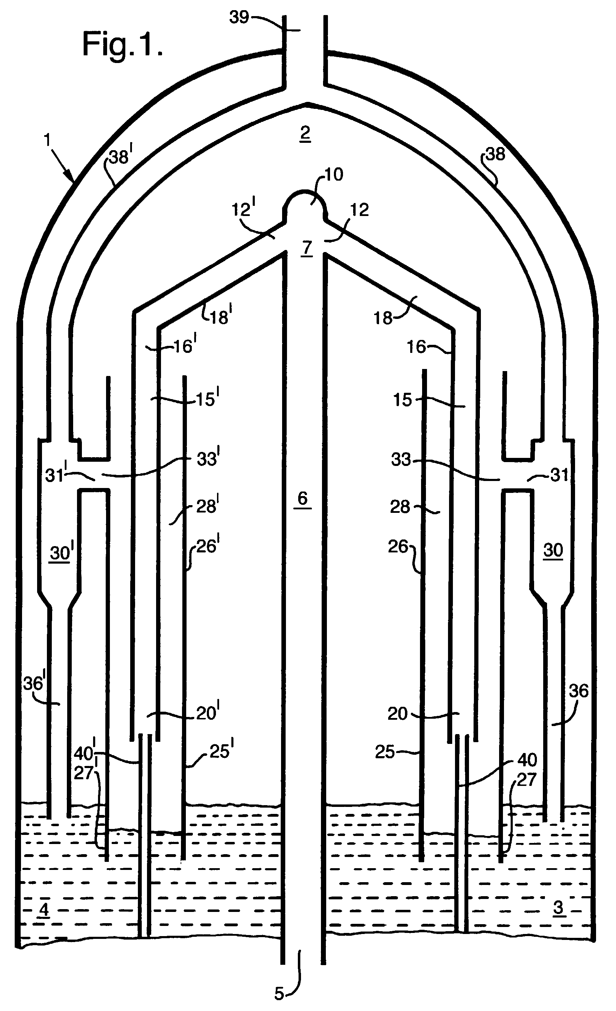

Reference is now made to Figure 1. The fluid catalytic cracking reactor system 1 according to the present invention comprises a reactor vessel 2 provided at its lower end with a stripping zone 3 which during normal operation contains a bed 4 of catalyst particles. The system further comprises a reactor riser 5 of which the downstream end part 6 is located in the reactor vessel 2 above the stripping zone 3. The upper end 7 of the reactor riser 5 is provided with a flow-reversal element 10, which flow reversal element 10 is provided with two outlet openings 12 and 12'.

The system 1 further comprises two open-ended downwardly directed reaction conduits 15 and 15', each having an upstream end 16, 16' which is in fluid communication with the outlet opening 12, 12' via a conduit 18, 18'. The downstream ends 20 and 20' of the two reaction conduits 15 and 15' open above the stripping zone 3.

The system 1 further comprises two open-ended shrouds 25 and 25', wherein the upper part 26 and 26' of each shroud 25, 25' is arranged around a reaction conduit 15, 15', and wherein the lower part 27, 27' extends into the stripping zone 3. Between the outer surface of each reaction conduit 15, 15' and the inner surface of each shroud 25, 25' an annulus 28, 28' is defined.

In addition, the system 1 comprises two particle separators in the form of cyclone separators 30 and 30' of which the inlets 31 and 31' are in fluid communication with openings 33 and 33' in the wall of the shrouds 25 and 25'. Each cyclone separator 30, 30' has a dipleg 36, 36' for discharging catalyst particles into the stripping zone 3 and a gas outlet conduit 38, 38' for discharging gases into a gas outlet 39 of the reactor vessel 2.

During normal operation, a mixture of gaseous hydrocarbons and dispersed catalyst particles is passed at elevated temperatures upwards through the reactor riser 5 where primary cracking takes place. The reactor effluent comprising gaseous products and catalyst particles dispersed therein is guided by the flow reversal element 10 into the downwardly directed reaction conduits 15 and 15'. In the downwardly directed reaction conduits 15 and 15' secondary cracking takes place.

The effluent exits the lower ends 20 and 20' of the reaction conduits 15 and 15'. Catalyst particles fly downwards into the catalyst bed maintained in the stripping zone 3, and the gaseous reaction products pass upwards through the annuli 28 and 28'. Because the separation is not complete, the gaseous reaction products will entrain a limited amount of catalyst particles, and in order to separate this, the gaseous reaction products pass via the openings 33 and 33' into the cyclone separators 30 and 30'. Catalyst is discharged through the diplegs 36 and 36' and catalyst-depleted gaseous reaction products are discharged through gas outlet conduits 38 and 38'. The gaseous reaction products exit the reactor vessel 2 through gas outlet 39, and are passed to a unit (not shown) for further treatment.

The separated catalyst particles are collected in the stripping zone 3 which contains the bed 4 of catalyst particles fluidized by the action of stripping gas, usually steam. To maintain the catalyst inventory in the stripping zone 3 at a substantial constant level, stripped catalyst is removed from the stripping zone through a catalyst outlet (not shown), and from there the catalyst is passed to a regenerator (not shown). Stripping steam will flow upwards through the bed 4 of catalyst particles in the stripping zone 3 and exits the reactor vessel 2 via the upper ends of the annuli 28 and 28' and the openings 33 and 33'.

An advantage of the present invention is that it provides two-stage cracking wherein the cracking in the second stage is done in downflow, in which the residence times of gas and catalyst are substantially equal so that the time of contact between gas and catalyst is well defined. This allows tuning the design of the secondary cracking stage to the required product composition for the fluid catalytic cracking reactor system. The use of the system of the present invention is particularly advantageous in case one has a reactor riser with a small diameter, wherein a high velocity is maintained so that the residence time in the reactor riser is relatively short.

A further advantage is that a relatively sharp separation can be obtained at the downstream ends 20 and 20' of the two reaction conduits 15 and 15'. The separation can be improved by selecting the velocity of the catalyst particles exiting the downstream ends 20 and 20' and the velocity of the gas flowing upwardly into the annuli 30 and 30' so that the entrainment of catalyst particles by the upwardly flowing gas is minimized.

The fluid catalytic cracking reactor system can comprise more than two open-ended downwardly directed reaction conduits, each being in fluid communication with an outlet opening of the flow-reversal element. Suitably the number of reaction conduits is three or four.

As shown in Figure 1, the lower ends 27 and 27' of the shrouds 25 and 25' extend, during normal operation, into the bed 4 of catalyst particles in the stripping zone 3. This is done to prevent recirculation of gas from the interior of the reactor vessel 2.

For the same reason, the diplegs 36 and 36' extend into the bed 4 of catalyst particles. Additionally, the diplegs can be provided with flapper valves (not shown) which are known as such.

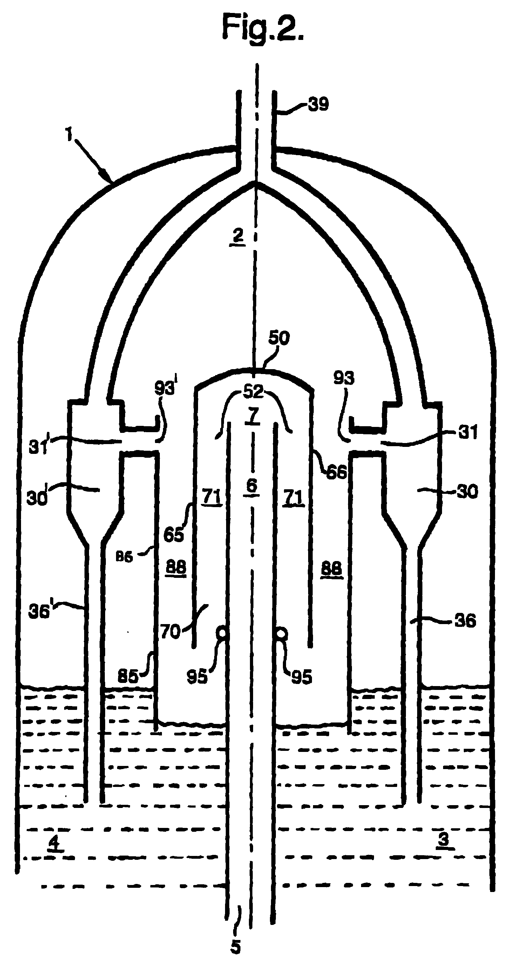

The system as described in the above included two or more downwardly directed reaction conduits. However, it is also possible to use only one reaction conduit, for example the system could include reaction conduit 15 only. Alternatively, the reaction conduit is a co-annular pipe around the reaction riser. This alternative is shown in Figure 2, wherein elements which are similar to elements shown in Figure 1 have got the same reference numeral.

The upper end 7 of the reactor riser 5 is provided with a flow-reversal element 50, which flow reversal element 50 is provided with one outlet opening in the form of annular opening 52. The system 1 further comprises one open-ended downwardly directed reaction conduit 65 which has an upstream end 66 which is in fluid communication with the outlet opening 5. The downstream end 70 of the reaction conduit 65 opens above the stripping zone 3. Between the outer surface of the reactor riser 6 and the inner surface of the reaction conduit 65 an annulus 71 is defined.

The system 1 further comprises an open-ended shroud 85, having an upper part 86 which is arranged around the reaction conduit 65 and a lower part 87 which extends into the stripping zone 3. Between the outer surface of the reaction conduit 65 and the inner surface of the shroud 85 an annulus 88 is defined. The system 1 also comprises the inlets 31 and 31' of the cyclone separators 30 and 30' are in fluid communication with openings 93 and 93' in the wall of the shroud 85.

Normal operation of this system is similar to normal operation of the system as described with reference to Figure 1, wherein secondary cracking takes place in the annulus 71.

The cross-sectional area of the space in which secondary cracking takes place is the sum of the cross-sectional areas of each reaction conduit 15 (in the embodiment of Figure 1) or the cross-sectional area of the annulus 71 (in the embodiment of Figure 2), this cross-sectional area is in the range of from 0.5 to 2 times the cross-sectional area of the reactor riser 6. The cross-sectional area of the annulus or annuli (28, 28' and 88) through which the gaseous reaction products pass upwards is in the range of from 0.5 to 2 times the cross-sectional area of the reactor riser 6.

In a suitable embodiment, pre-stripping gas is introduced into the downstream ends of the reaction conduits. In the embodiment as shown in Figure 1, this can be done by means of supply conduits 40 and 40' which extend into the downstream ends 20 and 20' of the reaction conduits 15 and 15' along the central axes of the reaction conduits 15 and 15'. In the embodiment as shown in Figure 2 this is done by means of an injector in the form of a ring 95 with outlet openings (not shown) arranged in the downstream end 70 of the reaction conduit 65. The ring 95 is located near the outer surface of the reactor riser 5.

The distance between the lower end of the reaction conduit and the level at which the pre-stripping steam is introduced into the reaction conduit is suitably up to 5 times the inner diameter of the reaction conduit, and more suitably between 0.5 and 2 times the inner diameter of the reaction conduit.

An advantage of using pre-striping steam in this way is that steam is present at the place where catalyst particles are separated from the gaseous reaction products to strip already reaction products from the catalyst particles, as a result the amount of reaction products entrained with the catalyst particles is reduced.

Suitably the conduits are covered with insulation material (not shown).

## Claims

1. A fluid catalytic cracking reactor system comprising a reactor vessel provided at its lower end with a stripping zone, a reactor riser of which the downstream end part is located in the reactor vessel above the stripping zone, a flow-reversal element arranged at the upper end of the reactor riser provided with an outlet opening, an open-ended downwardly directed reaction conduit having an upstream end which is in fluid communication with the outlet opening and a downstream end opening above the stripping zone, an open-ended shroud of which the upper part is arranged around the reaction conduit and of which the lower part extends into the stripping zone, and a particle separator of which the inlet is in fluid communication with an opening in the wall of the shroud.

2. The system according to claim 1, wherein means for introducing pre-stripping gas are arranged in the downstream end of the reaction conduit(s).

3. The system according to claim 2, wherein the distance between the lower end of the reaction conduit and the level at which the pre-stripping steam is introduced into the reaction conduit is up to 5 times the inner diameter of the reaction conduit.
